# EUROPÄISCHE PATENTSCHRIFT

(11) **EP 4 065 352 B1**
(45) Veröffentlichungstag und Bekanntmachung des Hinweises auf die Patenterteilung: **15.10.2025**
(21) Anmeldenummer: 20810946.2
(22) Anmeldetag: 19.11.2020
(51) Int. Cl.: B29C 70/52, B29D 99/00, B29C 70/54, B60B 1/02, B60B 21/06, B60B 1/00, B29C 70/20

(54) **PULTRUSIONSVERFAHREN UND PULTRUSIONSVORRICHTUNG ZUR HERSTELLUNG GEKRÜMMTER VERBUNDPROFILE**
PULTRUSION METHOD AND PULTRUSION DEVICE FOR PRODUCING CURVED COMPOSITE PROFILES
PROCÉDÉ DE PULTRUSION ET DISPOSITIF DE PULTRUSION POUR LA PRODUCTION DE PROFILÉS COMPOSITES COURBES

(30) Priorität: 26.11.2019 DE 102019218268
(43) Veröffentlichungstag der Anmeldung: 05.10.2022
(73) Patentinhaber: Fraunhofer-Gesellschaft zur Förderung der angewandten Forschung e.V., 80686 München (DE)
(72) Erfinder: HANNEMANN, Christian, 09126 Chemnitz (DE); WEINTRAUT, Dennis, 09126 Chemnitz (DE); LÖPITZ, David, 09126 Chemnitz (DE); LIES, Carsten, 09126 Chemnitz (DE)
(74) Vertreter: Pfenning, Meinig & Partner mbB
(86) Internationale Anmeldenummer: PCT/EP2020/082716
(87) Internationale Veröffentlichungsnummer: WO 2021/104993

(56) Entgegenhaltungen:
- WO-A1-2017/072561
- DE-A1- 1 629 188
- US-A- 3 873 399
- US-A- 4 469 541
- US-B2- 9 044 998

## Beschreibung

Die Erfindung betrifft ein Pultrusionsverfahren zur Herstellung gekrümmter Verbundprofile bei dem Verstärkungsmaterialien mit einem Polymermatrixmaterial benetzt und die benetzten Verstärkungsmaterialien mittels einer Strangziehvorrichtung durch ein Formwerkzeug gezogen werden. Des Weiteren betrifft die Erfindung eine Pultrusionsvorrichtung mit einem Formwerkzeug und einer Strangziehvorrichtung.

Das konventionelle Pultrusionsverfahren basiert auf einem Ziehen von Verstärkungsmaterialien, z.B. Fasern oder anderen textilen Halbzeugen, von Spulen durch ein Harzbad und ein Formwerkzeug. In dem Formwerkzeug werden die mit Harz benetzten Verstärkungsmaterialien zu einem Verbundprofil geformt und geometrisch bestimmt. Des Weiteren werden die benetzten Verstärkungsmaterialien durch Zufuhr von Energie, beispielsweise durch elektrisches Beheizen oder Mittels UV-Strahlung, zumindest teilweise ausgehärtet.

Konventionell wird dieser Prozess durch sogenannte Puller angetrieben, die am fertigen und ausgehärteten Verbundprofil angreifen und alle Ausgangsmaterialien durch die einzelnen Verfahrensstufen ziehen, wodurch geradlinig geformte Verbundprofile kontinuierlich hergestellt werden können.

Die Herstellung gekrümmter Verbundprofile erfordert zusätzliche konstruktive und verfahrenstechnische Maßnahmen. So ist aus der DE 10 2016 015 421 A1 ein Pultrusionsverfahren bekannt, bei dem das formgebende Werkzeug relativ zu einem zumindest zeitweise stillstehenden Kunststoffprofil entlang einer gekrümmten Trajektorie hin und her bewegt wird. Mit diesem sogenannten Radius-Pultrusionsverfahren können zum Beispiel Kreisbogensegmente hergestellt werden, die dann in weiteren Fügeschritten zu einem kreisförmigen Verbundprofil zusammengefügt werden können.

Aufgrund des diskontinuierlichen Prozessverlaufs und der erforderlichen zusätzlichen Arbeitsschritte ist das Radius-Pultrusionsverfahren im Vergleich zum konventionellen Pultrusionsverfahren jedoch sehr zeitaufwändig und kostenintensiv. Des Weiteren ist der kleinste zu erreichende Radius des Kreisbogens durch die Größe und Anordnung des formgebenden Werkzeugs und der Puller begrenzt. Ebenso ist die größte zu erreichende Länge des Kreisbogens bzw. Formlänge begrenzt, da für eine störungsfreie Verfahrensdurchführung eine Kollision des Kunststoffprofils mit dem formgebenden Werkzeug vermieden werden muss.

So sind aus US 3 873 399 A eine Vorrichtung und ein Verfahren zur Herstellung von langestreckten mit Verstärkung versehene Kunststoffartikel bekannt.

US 4 469 541 A betrifft ein Verfahren zur Formgebung von verstärkten Kunststoffverbundartikeln.

Aus US 9 044 998 B2 kann ein Rahmenteil oder einen Rahmen entnehmen, das/die aus einem Kompositmaterial bestehen.

Die Aufgabe der Erfindung besteht daher darin, ein Pultrusionsverfahren und eine Pultrusionsvorrichtung vorzuschlagen, mit denen gekrümmte Verbundprofile variabel sowie zeit- und kostensparend hergestellt werden können. Erfindungsgemäß wird die Aufgabe mit den in den Ansprüchen 1 und 7 genannten Merkmalen gelöst. Vorteilhafte Varianten ergeben sich aus den in den Unteransprüchen genannten Merkmalen.

Bei dem erfindungsgemäßen Pultrusionsverfahren zur Herstellung gekrümmter Verbundprofile werden Verstärkungsmaterialien mit einem Polymermatrixmaterial benetzt und die benetzten Verstärkungsmaterialien mittels einer Strangziehvorrichtung durch ein Formwerkzeug gezogen. Dabei werden die benetzten Verstärkungsmaterialien in dem Formwerkzeug zu einem Verbundprofil geformt und formstabil ausgehärtet. Das formstabil ausgehärtete Verbundprofil wird nach Austritt aus dem Formwerkzeug auf einer zylinderförmigen Einheit als Teil der Strangziehvorrichtung kontinuierlich aufgewickelt.

Die Verstärkungsmaterialien können beispielsweise mit Fasern oder textilen Halbzeugen gebildet sein. Das Verbundprofil kann ein Faserverbundprofil sein. Das Polymermatrixmaterial kann mit Harz, beispielsweise mit einem Epoxidharz, gebildet sein. Die benetzten Verstärkungsmaterialien können in dem Formwerkzeug auch vollständig ausgehärtet werden. Die Krümmung des Verbundprofils ist in dem Formwerkzeug vorgegeben. In diesem Fall werden die benetzten Verstärkungsmaterialien in dem Formwerkzeug zu einem formstabilen und gekrümmten Verbundprofil geformt. Zusätzlich kann eine vorgegebene, endgültige Krümmung des Verbundprofils auch erst beim Aufwickeln auf die zylinderförmige Einheit gebildet werden.

Hier und im Folgenden ist unter einer kontinuierlichen Aufwicklung ein Verfahrensschritt zu verstehen, bei dem ohne ein Stillstehen des Verbundprofils mindestens eine Windung des formstabil ausgehärteten Verbundprofils aufgewickelt werden kann. Beispielsweise kann das Verbundprofil mit mehreren Windungen auf die zylinderförmige Einheit aufgewickelt werden. Je nach Geometrie und/oder Anordnung des Formwerkzeugs und der zylinderförmigen Einheit ergeben sich bei der Aufwicklung unterschiedliche Bahnen bzw. Trajektorien. Das Verbundprofil wird spiralförmig oder in Form einer Helix auf die zylinderförmige Einheit aufgewickelt. Eine Helix bezeichnet dabei eine schraubenförmige Kurve oder Trajektorie entlang der sich das Verbundprofil um die zylinderförmige Einheit windet.

Das vorgeschlagene Verfahren ermöglicht es, gekrümmte Verbundprofile kontinuierlich mit einer nahezu beliebigen Windungszahl und Formlänge in großer Stückzahl kostengünstig und zeitsparend herzustellen. Der Radius oder Krümmungsradius des Verbundprofils kann durch eine vorgegebene Krümmung der Bahn oder Trajektorie des Verbundprofils in dem Formwerkzeug oder in einem formgebenden Bereich des Formwerkzeugs vorgegeben werden und ist nicht durch die Größe bzw. Dimensionierung des Formwerkzeugs selbst begrenzt. Somit können auch gekrümmte Verbundprofile mit kleinen Radien hergestellt werden. Da das gekrümmte Verbundprofil in einem festen, ausgehärteten und formstabilen Zustand auf die zylinderförmige Einheit aufgewickelt werden kann, können auch gekrümmte Hohlprofile oder Vollprofile kontinuierlich hergestellt werden, ohne dass diese durch das Aufwickeln verformt werden. Das Aufwickeln oder Haspeln des Verbundprofils ermöglicht zudem ein unkompliziertes Ziehen oder Pullen der Verstärkungsmaterialien und führt somit zu einer steuerungsseitigen Vereinfachung des Pultrusionsprozesses. Durch das Aufwickeln oder Haspeln kann auch eine Stützwirkung der gekrümmten Profilstrukturen erreicht werden. Zudem können sich die Abzugskräfte und Klemmkräfte homogener über das Verbundprofil verteilen und auch verkleinern. Elastische Verformungen, die sich durch den Abzug in dem Profil gebildet haben, können sich nach dem Zuschnitt wieder abbauen. Ein kontinuierliches Aufwickeln des Verbundprofils kann durch eine kontinuierliche Rotation der zylinderförmigen Einheit um ihre mittlere Längsachse erreicht werden. Vorzugsweise wird das Verbundprofil oder zumindest ein Anfangsstück des Verbundprofils dabei an der zylinderförmigen Einheit fixiert oder gehalten und dann durch die Rotation wie bei einer Haspel aufgewickelt.

Nach dem Aufwickeln oder während des Aufwickelns können Segmente des Verbundprofils, beispielsweise kreisringförmige Segmente mit mindestens einer Windung, mittels eines Schneide- oder Sägewerkzeugs abgetrennt werden. Vorzugsweise werden kreisringförmige Segmente mittels eines V-Schnitts abgetrennt, d.h. die Schneidkante weist eine V-förmige Spitze auf. Ein V-Schnitt ermöglicht im Vergleich zu einem geradlinigen Schnitt eine vorteilhafte Lastenverteilung. Durch die Abtrennung bzw. Aufteilung des aufgewickelten Verbundprofils können nahezu vollständig geschlossene Kreisringe hergestellt werden, die lediglich eine kleine Öffnung an der Schnittstelle aufweisen. Alternativ können kreisringförmige Segmente auch mittels eines Schräg- oder Diagonalschnitts abgetrennt werden.

Zumindest zeitweise kann an dem Verbundprofil in eine zur mittleren Längsachse der zylinderförmigen Einheit parallele Richtung gezogen oder geschoben werden, um die kontinuierliche Aufwicklung des Verbundprofils in Form einer Helix durch einen in die Zieh- oder Schubrichtung ausgebildeten Versatz der Windungen zu gewährleisten. Eine zur mittleren Längsachse der zylinderförmigen Einheit parallele Richtung wird im Folgenden auch als Zylinderachsrichtung bezeichnet. Das translatorische Ziehen oder Schieben des Verbundprofils in Zylinderachsrichtung kann periodisch nach jeder Windung oder kontinuierlich erfolgen. Dadurch kann auf bzw. an der zylinderförmigen Einheit Platz für die Folgewicklung bzw. für die nächste Windung geschaffen werden.

Alternativ oder zusätzlich kann zumindest der formgebende Bereich des Formwerkzeugs leicht in eine Zylinderachsrichtung geneigt oder gekrümmt sein, um einen Versatz der Windungen beim Aufwickeln zu berücksichtigen und keine Spannungen im aufgewickelten Verbundprofil zu verursachen. Nach dem Aufschneiden des aufgewickelten Verbundprofils bzw. dem Abtrennen von kreisringförmigen Segmenten kann dann ein Versatz an den Enden der abgetrennten Ringe verbleiben. Der Versatz kann durch das Einbringen einer zusätzlichen mechanischen Spannung, beispielsweise durch ein Verbiegen der Ringendstücke, wieder kompensiert werden.

Zusätzlich oder alternativ kann das gekrümmte Verbundprofil vor dem Aufwickeln auf die zylinderförmige Einheit in eine zur mittleren Längsachse der zylinderförmigen Einheit parallele Richtung um mindestens eine Breite des Querschnitts des Verbundprofils verbogen werden, um die kontinuierliche Aufwicklung des Verbundprofils in Form einer Helix durch einen in die Biegerichtung ausgebildeten Versatz der Windungen zu gewährleisten. Dabei kann das Verbundprofil unter einer leichten Spannung aufgewickelt werden. Durch das Verbiegen ist das Verbundprofil nicht mehr zweidimensional in einer Ebene angeordnet, sondern kann sich schraubenförmig bzw. in Form einer Helix um die zylinderförmige Einheit winden. Nach dem Aufschneiden der resultierenden Schraube oder Helix bzw. dem Abtrennen von kreisringförmigen Segmenten kann ein abgetrennter nahezu geschlossener Kreisring selbstständig entspannen und sich ohne innere Spannungen zu einem Ring fügen. Das Pultrusionsverfahren kann beispielsweise zur Herstellung von Fahrradfelgen verwendet werden. Dabei kann es sich als vorteilhaft erweisen, die Verstärkungsmaterialien zusammen mit einem Einlegeband als Einleger durch das Formwerkzeug zu ziehen und in Form des Verbundprofils auf die zylinderförmige Einheit aufzuwickeln. Vorzugsweise wird das Einlegeband dabei in dem Formwerkzeug mit den Verstärkungsmaterialien mittels des Polymermatrixmaterials stoffschlüssig verbunden. Dabei kann auch die Stabilität der Felge erhöht werden. Beispielsweise kann das Einlegeband Notlaufeigenschaften bei einem Felgenbruch ermöglichen. Vorzugsweise weist das Einlegeband hohlzylindrische Erhöhungen auf, die eine in dem Verbundprofil zu erreichende Lochung für die Position der Speichen vorgeben können. Die hohlzylindrischen Erhöhungen verdrängen dabei die Verstärkungsmaterialien längs des Verbundprofils und ersetzen damit sonst notwendige Durchtrennungen oder Bohrungen des Verbundprofils. Insbesondere erhöht sich die Faserdichte und Steifigkeit an den hohlzylindrischen Erhöhungen bzw. Speichenpositionen. Durch ein form- oder stoffschlüssiges Verbinden zwischen Einlegeband und den Verstärkungsmaterialien kann die Lasteinkopplung besonders an der Öffnung bzw. Fügestelle unterstützt und besser verteilt werden. Das Einlegeband kann beispielsweise als Metallband mit mindestens einem metallischen Werkstoff gebildet sein.

Das Pultrusionsverfahren kann mit der im Folgenden beschriebenen Pultrusionsvorrichtung durchgeführt werden:
Die erfindungsgemäße Pultrusionsvorrichtung zur Herstellung gekrümmter Verbundprofile weist ein Formwerkzeug und eine Strangziehvorrichtung mit einer zylinderförmigen Einheit auf. Das Formwerkzeug ist dazu eingerichtet, mit einem Polymermatrixmaterial benetzte Verstärkungsmaterialien zu einem Verbundprofil mit einem vorgegebenen Querschnittsprofil und/oder Krümmungsradius zu formen und formstabil auszuhärten. Die Strangziehvorrichtung ist dazu eingerichtet, die zu einem Verbundprofil geformten und ausgehärteten Verstärkungsmaterialien auf der zylinderförmigen Einheit kontinuierlich aufzuwickeln.

Das Formwerkzeug kann eine Heizvorrichtung, beispielsweise eine elektrische Heizung oder einen Ofen, zum Beheizen der mit dem Polymermatrixmaterial benetzten Verstärkungsmaterialien aufweisen. Alternativ oder zusätzlich kann das Formwerkzeug auch eine Strahlungskammer zum Bestrahlen der mit dem Polymermatrixmaterial benetzten Verstärkungsmaterialien mit elektromagnetischer Strahlung, vorzugsweise im ultravioletten Wellenlängenbereich, aufweisen. Zudem kann das Formwerkzeug eine innere Kontur aufweisen, die eine äußere Kontur des Verbundprofils vorgibt. Zum Ausbilden eines Verbundprofils als Hohlprofil kann das Formwerkzeug auch eine weitere innere Kontur aufweisen, die eine innere Kontur des Verbundprofils vorgibt. Das Formwerkzeug kann auch eine in Transportrichtung nach der Heizvorrichtung oder der Strahlungskammer angeordnete Aushärteeinheit aufweisen, in/auf der das Verbundprofil formstabil aushärtet, wobei die Bahn bzw. Trajektorie des Verbundprofils nach Austritt aus dem Formwerkzeug in der Aushärteeinheit bestimmt bzw. vorgegeben werden kann. Als Transportrichtung wird hier und im Folgenden die Richtung bezeichnet in welcher die Verstärkungsmaterialien oder das Verbundprofil durch das Formwerkzeug gezogen werden.

Die Strangziehvorrichtung kann einen Rotationsantrieb aufweisen, der dazu eingerichtet ist, die zylinderförmige Einheit um ihre mittlere Längsachse zu drehen. Der äußere Radius der zylinderförmigen Einheit sollte dabei ungefähr dem vorgegebenen Krümmungsradius entsprechen.

Zumindest ein formgebender Bereich des Formwerkzeugs, also ein in Transportrichtung am Ende des Formwerkzeugs angeordneter Bereich des Formwerkzeugs oder der Aushärteeinheit, oder ein formgebender Bereich der in dem Formwerkzeug verlaufenden Bahn bzw. Trajektorie des Verbundprofils kann auch in einer zur mittleren Längsachse der zylinderförmigen Einheit parallelen Richtung geneigt oder gekrümmt sein. Der Neigungs- oder Krümmungswinkel kann so gewählt werden, dass der gewünschte Versatz der Windungen bei der Aufwicklung berücksichtigt wird. In diesem formgebenden Bereich kann der Normalvektor der Tangentialebene der Bahn bzw. Trajektorie des Verbundprofils mit der mittleren Längsachse der zylinderförmigen Einheit einen Winkel φ bilden, der größer als 0° und kleiner als 90° ist. Alternativ kann der Winkel φ auch 0° oder 90° betragen.

Alternativ kann die Längsachse des Formwerkzeugs oder die in dem Formwerkzeug verlaufende Bahn bzw. Trajektorie des Verbundprofils auch in einer Ebene, im Folgenden auch als Werkzeugebene bezeichnet, angeordnet sein. Insbesondere kann die mittlere Längsachse der zylinderförmigen Einheit einen Normalvektor der Werkzeugebene bilden.

Vorzugsweise ist die zylinderförmige Einheit mit mehreren um die mittlere Längsachse der zylinderförmigen Einheit kreisförmig angeordneten Fördervorrichtungen gebildet. Beispielsweise können mindestens drei Fördervorrichtungen, vorzugsweise mindestens sechs Fördervorrichtungen, mit gleichen Winkelabständen zueinander angeordnet sein. Die Fördervorrichtungen können zur mittleren Längsachse der zylinderförmigen Einheit parallel ausgerichtet sein. Mindestens eine Fördervorrichtung kann dazu eingerichtet sein, das gekrümmte Verbundprofil in eine Zylinderachsrichtung oder in eine zur mittleren Längsachse der zylinderförmigen Einheit parallel verlaufende Richtung zu verschieben oder zu ziehen.

Vorzugsweise weist mindestens eine der Fördervorrichtungen mindestens ein Fixiermittel und/oder mindestens einen Antrieb auf. Die mindestens eine Fördervorrichtung kann dazu eingerichtet sein, das Verbundprofil mittels des mindestens einen Fixiermittels an der mindestens einen Fördervorrichtung zu halten bzw. zu fixieren. Die Fixierung sollte vorteilhaft am in Zugrichtung vorderen Ende des Verbundprofils erfolgen.

Des Weiteren kann mindestens eine der Fördervorrichtungen dazu eingerichtet sein das Verbundprofil mittels des mindestens einen Antriebs in eine zur mittleren Längsachse der zylinderförmigen Einheit parallele Richtung zu verschieben.

Für ein gleichmäßiges Aufwickeln des Verbundprofils sollten die Rotationsbewegung der zylinderförmigen Einheit und die translatorische Bewegung, die mit mindestens einer der Fördervorrichtungen durchgeführt wird, miteinander synchronisiert sein, so dass die Wicklungen nebeneinander oder in bestimmten Abständen zueinander auf der zylinderförmigen Einheit ausgebildet werden können.

Die Strangziehvorrichtung kann zusätzlich eine entlang ihrer mittleren Längsachse stabförmige Justiervorrichtung, z.B. ein Haltestab, aufweisen. Die Justiervorrichtung kann mit der zylinderförmigen Einheit und/oder den Fördervorrichtungen über Haltemittel, z.B. Stäbe, Stangen oder Hebeln, gelenkig verbunden sein, wobei durch ein Ziehen und/oder Drücken der stabförmigen Justiervorrichtung entlang der mittleren Längsachse der zylinderförmigen Einheit und ein Verschwenken der Stäbe, Stangen oder Hebeln der Radius der zylinderförmigen Einheit verändert werden kann. Durch die Veränderung des Radius kann die zylinderförmige Einheit an ihrer Mantelfläche in Berührung mit dem Verbundprofil gebracht werden. Alternativ können die Fördervorrichtungen auch von dem Verbundprofil, beispielsweise zum störungsfreien Abtrennen von Segmenten des aufgewickelten Verbundprofils, entfernt werden. Mit der Justiervorrichtung kann auch der äußere Radius der zylinderförmigen Einheit einem in dem Formwerkzeug vorgegebenen Krümmungsradius des Verbundprofils angepasst werden. Somit kann eine Strangziehvorrichtung und/oder zylinderförmige Einheit auch für Formwerkzeuge und/oder Verbundprofile mit unterschiedlichen Krümmungsradien verwendet werden.

Besonders vorzugsweise sind die Fördervorrichtungen jeweils mit mindestens einer umlaufenden Schleppkette oder jeweils mit einem umlaufenden Förderband gebildet. Eine Schleppkette oder ein Förderband kann dabei auf Rollen oder Achsen um eine Rotationsachse drehbar gelagert sein. Die Rotationsachse kann dabei mit der mittleren Längsachse der zylinderförmigen Einheit einen rechten Winkel bilden.

Die Strangziehvorrichtung kann auch mit einem Einlegeband, das hohlzylindrische Erhöhungen aufweist, gebildet sein, wobei die Strangziehvorrichtung dazu eingerichtet sein kann, das Einlegeband zusammen mit den Verstärkungsmaterialien durch das Formwerkzeug zu ziehen und auf der zylindrischen Einheit aufzuwickeln.

Ausführungsbeispiele der Erfindung sind in den Zeichnungen dargestellt und werden nachfolgen anhand der Figuren 1 bis 3 erläutert.

Dabei zeigen:
Fig. 1a einen Längsschnitt durch ein Beispiel einer Pultrusionsvorrichtung mit einem Formwerkzeug und einer zylinderförmigen Einheit,
Fig. 1b einen Querschnitt durch die Pultrusionsvorrichtung entlang der Schnittlinie A-A in Figur 1a,
Fig. 2a einen Längsschnitt durch ein Beispiel einer Strangziehvorrichtung mit einer Justiervorrichtung und einer zylinderförmigen Einheit mit einem kleinen Radius,
Fig. 2b einen Längsschnitt durch eine Strangziehvorrichtung mit einer Justiervorrichtung und einer zylinderförmigen Einheit mit einem großen Radius,
Fig. 2c einen Längsschnitt durch ein weiteres Beispiel einer Strangziehvorrichtung mit einer zylinderförmigen Einheit und einem zu einer Helix aufgewickelten gekrümmten Verbundprofil mit mehreren Windungen,
Fig. 2d einen Querschnitt durch die Strangziehvorrichtung entlang der Schnittlinie A-A in Figur 2c,
Fig. 3a einen Längsschnitt durch ein Einlegeband mit hohlzylindrischen Erhöhungen,
Fig. 3b einen Querschnitt durch das Einlegeband entlang der Schnittlinie A-A in Figur 3a.

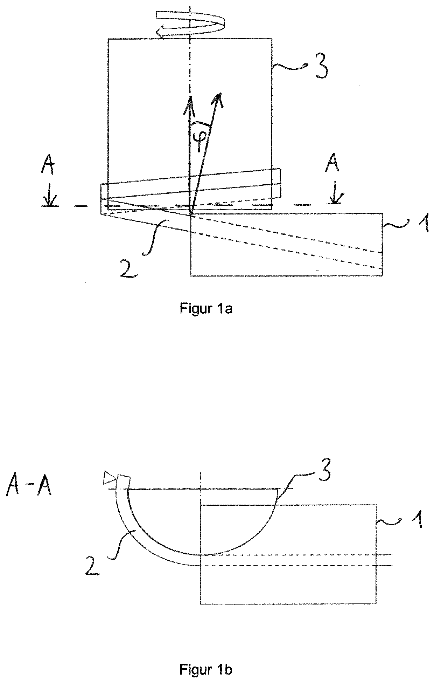

Figur 1a zeigt einen Längsschnitt durch ein Beispiel einer Pultrusionsvorrichtung. Die Pultrusionsvorrichtung weist ein Formwerkzeug 1 und eine Strangziehvorrichtung mit einer zylinderförmigen Einheit 3 auf. Das Formwerkzeug 1 ist dazu eingerichtet, mit einem Polymermatrixmaterial benetzte Verstärkungsmaterialien zu einem Verbundprofil 2 mit einem vorgegebenen Querschnittsprofil und Krümmungsradius zu formen und formstabil auszuhärten. Die Strangziehvorrichtung, die mit der zylinderförmigen Einheit 3 gebildet ist, ist dazu eingerichtet, die zu einem Verbundprofil 2 geformten und ausgehärteten Verstärkungsmaterialien auf der zylinderförmigen Einheit 3 kontinuierlich aufzuwickeln. Die Strangziehvorrichtung kann zusätzlich ein Schienensystem (nicht gezeigt) als Transportmittel aufweisen, mit denen die Verstärkungsmaterialien bzw. das Verbundprofil 2 durch das Formwerkzeug 1 transportiert und bis zur zylinderförmigen Einheit 3 geführt werden können. Das Polymermatrixmaterial ist ein Harz und die Verstärkungsmaterialien sind mit Fasern gebildet.

Mit der in Figur 1a gezeigten Pultrusionsvorrichtung wird ein Pultrusionsverfahren zur Herstellung gekrümmter Verbundprofile 2 durchgeführt. Bei dem Pultrusionsverfahren werden Verstärkungsmaterialien mit einem Polymermatrixmaterial benetzt und die benetzten Verstärkungsmaterialien mittels der Strangziehvorrichtung durch das Formwerkzeug 1 gezogen. Dabei werden die benetzten Verstärkungsmaterialien in dem Formwerkzeug 1 zu einem Verbundprofil 2 geformt und formstabil ausgehärtet. Das formstabil ausgehärtete Verbundprofil 2 wird nach Austritt aus dem Formwerkzeug 1 auf der zylinderförmigen Einheit 3, welche Teil der Strangziehvorrichtung ist, kontinuierlich aufgewickelt.

Das Verbundprofil 2 wird dabei als festes und formstabiles Hohlprofil oder Querschnittsprofil mit mehreren Windungen in Form einer Helix auf die zylinderförmige Einheit 3 aufgewickelt. Das kontinuierliche Aufwickeln des Verbundprofils 2 wird durch eine kontinuierliche Rotation der zylinderförmigen Einheit 3 um ihre mittlere Längsachse erreicht. Dafür weist die Strangziehvorrichtung bzw. die zylinderförmige Einheit einen Rotationsantrieb auf.

In Figur 1a ist der formgebende Bereich des Formwerkzeugs 1 leicht in eine Zylinderachsrichtung geneigt, um einen Versatz der Windungen beim Aufwickeln zu berücksichtigen und keine zusätzlichen Spannungen im aufgewickelten Verbundprofil 2 zu verursachen. Der Normalvektor der Tangentialebene der in dem formgebenden Bereich des Formwerkzeugs 1 verlaufenden Trajektorie des Verbundprofils 2 bildet dabei mit der mittleren Längsachse der zylinderförmigen Einheit 3 einen Winkel φ, der beispielsweise 20° betragen kann.

Aus der schematischen Darstellung in Figur 1b wird deutlich, dass das Verbundprofil 2 mit einem vorgegebenen Krümmungsradius auf die zylinderförmige Einheit 3 aufgewickelt wird. Der äußere Radius der zylinderförmigen Einheit 3 entspricht dabei dem vorgegebenen Krümmungsradius des Verbundprofils 2. Wiederkehrende Merkmale sind in dieser Figur wie auch in den folgenden Figuren mit identischen Bezugszeichen versehen.

Mit der beschriebenen Pultrusionsvorrichtung können beispielsweise kreisringförmige Segmente mit jeweils einer Windung, z.B. mittels V-Schnitt, abgetrennt werden.

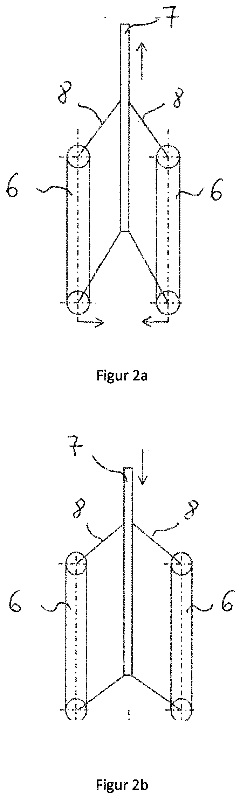

Figur 2a zeigt einen Längsschnitt durch ein Beispiel einer Strangziehvorrichtung mit einer zylinderförmigen Einheit 3 mit einem kleinen Radius. Die zylinderförmige Einheit 3 ist dabei mit mehreren um die mittlere Längsachse der zylinderförmigen Einheit 3 kreisförmig angeordneten Fördervorrichtungen 6 gebildet. Die Fördervorrichtungen 6 verlaufen zur mittleren Längsachse der zylinderförmigen Einheit 3 parallel. Die Strangziehvorrichtung weist außerdem eine entlang der mittleren Längsachse der zylinderförmigen Einheit 3 ausgerichtete stabförmige Justiervorrichtung 7 auf. Die Justiervorrichtung 7 ist mit den Fördervorrichtungen 6 über Stäbe 8 als Haltemittel 8 gelenkig verbunden, wobei durch ein Ziehen der stabförmigen Justiervorrichtung 7 entlang der mittleren Längsachse der zylinderförmigen Einheit 3 der Radius der zylinderförmigen Einheit 3 durch eine Bewegung der Stäbe 8 um Rotationsachsen an ihren Stirnenden verkleinert werden kann.

Die Fördervorrichtungen 6 sind jeweils mit einer umlaufenden Schleppkette gebildet. Die Schleppketten sind dabei auf Rollen um eine Rotationsachse drehbar gelagert. Die Rotationsachsen der Schleppketten bilden mit der mittleren Längsachse der zylinderförmigen Einheit 3 einen rechten Winkel.

Figur 2b zeigt einen Längsschnitt durch die Strangziehvorrichtung mit einer zylinderförmige Einheit 3 mit einem großen Radius. Der Radius der zylinderförmigen Einheit 3 kann durch ein Drücken der stabförmigen Justiervorrichtung 7 entlang der mittleren Längsachse der zylinderförmigen Einheit 3 und einem Verschwenken der Stäbe 8 in Richtung des Formwerkzeugs 1 vergrößert werden.

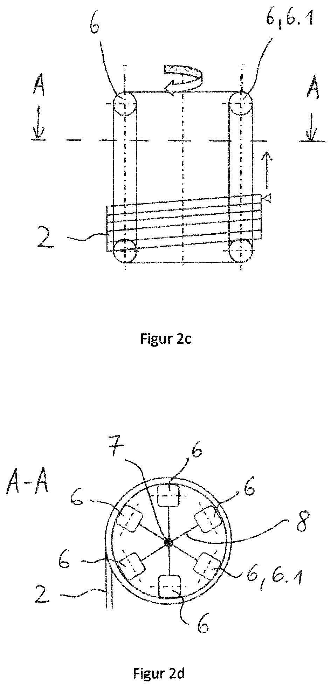

Figur 2c zeigt einen Längsschnitt durch eine Strangziehvorrichtung mit der in Figur 2b gezeigten zylinderförmige Einheit 3 mit einem großen Radius (Justiervorrichtung 7 und Haltemittel 8 sind für eine übersichtlichere Darstellung in Fig. 2c nicht gezeigt). Dabei ist das gekrümmte Verbundprofil 2 mit mehreren Windungen aufgewickelt. In Figur 2c ist eine Fördervorrichtung 6.1 dazu eingerichtet, das gekrümmte Verbundprofil 2 in eine zur mittleren Längsachse der zylinderförmigen Einheit 3 parallel verlaufende Richtung zu verschieben. Dazu weist die eine Fördervorrichtung 6.1 Stifte als Greifvorrichtungen bzw. Fixiermittel und einen Antrieb auf. Mit den Stiften bzw. einem Fixiermittel wird das Verbundprofil 2, bevorzugt mit dem in Zugrichtung vorderen Ende an der einen Fördervorrichtung 6.1 fixiert. Der Antrieb ist dazu eingerichtet, das Verbundprofil 2 in eine zur mittleren Längsachse der zylinderförmigen Einheit 3 parallele Richtung zu verschieben. Dadurch wird die kontinuierliche Aufwicklung des Verbundprofils 2 in Form einer Helix durch einen in die Ziehrichtung ausgebildeten Versatz der Windungen gewährleist. Die Rotation der zylinderförmigen Einheit 3 und Bewegung der Fördereinrichtung 6.1 parallel zur mittleren Längsachse der zylinderförmigen Einheit 3 sollten dabei synchronisiert erfolgen, um ein gleichmäßiges Wickeln zu ermöglichen.

Figur 2d zeigt einen Querschnitt durch die Strangziehvorrichtung entlang der Schnittlinie A-A in Figur 2c. Dabei wird deutlich, dass die zylinderförmige Einheit mit insgesamt sechs Fördervorrichtungen 6 gebildet ist. Die Fördervorrichtungen sind kreisförmig um die Längsachse der zylinderförmigen Einheit angeordnet.

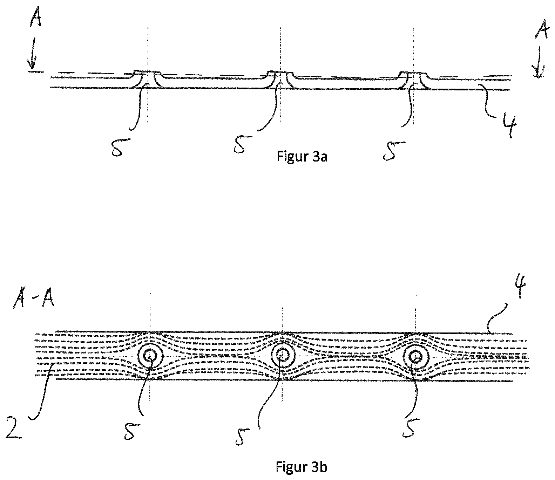

Figur 3a zeigt einen Längsschnitt durch ein Einlegeband 4 mit hohlzylindrischen Erhöhungen 5. Figur 3b zeigt einen Querschnitt durch das Einlegeband 4 entlang der Schnittlinie A-A in Figur 3a. Bei dem Pultrusionsverfahren werden die Verstärkungsmaterialien mit dem Einlegeband 4 als Einleger durch das Formwerkzeug 1 gezogen und in Form des Verbundprofils 2 auf die zylinderförmige Einheit 3 aufgewickelt. Das Einlegeband 4 wird dabei in dem Formwerkzeug 1 mit den Verstärkungsmaterialien als Teil des Verbundprofils stoffschlüssig verbunden. Wie in Figur 3b gezeigt, verdrängen die hohlzylindrischen Erhöhungen 5 dabei die Verstärkungsmaterialien, insbesondere Fasern oder Filamente des jeweiligen Verbundmaterials längs des Verbundprofils 2. Dadurch werden Löcher in dem Verbundprofil 2 ausgebildet.

## Patentansprüche

1. Pultrusionsverfahren zur Herstellung gekrümmter Verbundprofile, bei dem
Verstärkungsmaterialien mit einem Polymermatrixmaterial benetzt und die benetzten Verstärkungsmaterialien mittels einer Strangziehvorrichtung durch ein Formwerkzeug (1) gezogen werden, wobei die benetzten Verstärkungsmaterialien in dem Formwerkzeug (1) zu einem Verbundprofil (2) geformt und formstabil ausgehärtet werden, und
das formstabil ausgehärtete Verbundprofil (2) nach Austritt aus dem Formwerkzeug (1) auf einer zylinderförmigen Einheit (3) als Teil der Strangziehvorrichtung kontinuierlich aufgewickelt wird und
das kontinuierliche Aufwickeln des Verbundprofils (2) durch eine kontinuierliche Rotation der zylinderförmigen Einheit (3) um ihre mittlere Längsachse erreicht wird; **dadurch gekennzeichnet, dass**
das Verbundprofil (2) mit mehreren Windungen spiralförmig oder in Form einer Helix auf die zylinderförmige Einheit (3) aufgewickelt wird.

2. Pultrusionsverfahren nach Anspruch 1, **dadurch gekennzeichnet, dass** das Verbundprofil (2) als festes und formstabiles Hohlprofil auf die zylinderförmige Einheit (3) aufgewickelt wird.

3. Pultrusionsverfahren nach einem der vorhergehenden Ansprüche, **dadurch gekennzeichnet, dass** kreisringförmige Segmente mit mindestens einer Windung mittels V-Schnitt von dem aufgewickelten Verbundprofil (2) abgetrennt werden.

4. Pultrusionsverfahren nach einem der vorhergehenden Ansprüche, **dadurch gekennzeichnet, dass** das Verbundprofil (2) zumindest zeitweise in eine zur mittleren Längsachse der zylinderförmigen Einheit (3) parallele Richtung gezogen oder geschoben wird, so dass ein kontinuierliches Aufwickeln des Verbundprofils (2) in Form einer Helix durch einen in die Zieh- oder Schubrichtung ausgebildeten Versatz der Windungen erreicht wird.

5. Pultrusionsverfahren nach einem der vorhergehenden Ansprüche, **dadurch gekennzeichnet, dass** das gekrümmte Verbundprofil (2) vor dem Aufwickeln auf die zylinderförmige Einheit (3) in eine zur mittleren Längsachse der zylinderförmigen Einheit (3) parallele Richtung um mindestens eine Breite des Querschnitts des gekrümmten Verbundprofils (2) verbogen wird, so dass ein kontinuierliches Aufwickeln des Verbundprofils (2) in Form einer Helix durch einen in die Biegerichtung ausgebildeten Versatz der Windungen erreicht wird.

6. Pultrusionsverfahren nach einem der vorhergehenden Ansprüche, **dadurch gekennzeichnet, dass** die Verstärkungsmaterialien zusammen mit einem Einlegeband (4) durch das Formwerkzeug (1) gezogen und in Form des Verbundprofils (2) auf die zylinderförmige Einheit (3) aufgewickelt werden, wobei das Einlegeband (4) in dem Formwerkzeug (1) mit den Verstärkungsmaterialien stoffschlüssig verbunden wird und/oder das Einlegeband (4) hohlzylindrische Erhöhungen (5) aufweist, die eine in dem gekrümmten und ausgehärteten Verbundprofil (2) zu erreichende Lochung vorgeben.

7. Pultrusionsvorrichtung zur Herstellung gekrümmter Verbundprofile mit einem Formwerkzeug (1) und einer Strangziehvorrichtung, die eine zylinderförmige Einheit (3) aufweist, wobei
das Formwerkzeug (1) dazu eingerichtet ist, mit einem Polymermatrixmaterial benetzte Verstärkungsmaterialien zu einem Verbundprofil (2) mit einem vorgegebenen Querschnittsprofil und/oder Krümmungsradius zu formen und formstabil auszuhärten,
und die Strangziehvorrichtung dazu eingerichtet ist, die zu einem Verbundprofil (2) geformten und ausgehärteten Verstärkungsmaterialien auf der zylinderförmigen Einheit (3) kontinuierlich aufzuwickeln und die Strangziehvorrichtung einen Rotationsantrieb aufweist, der dazu eingerichtet ist, die zylinderförmige Einheit (3) um ihre mittlere Längsachse zu drehen, **dadurch gekennzeichnet, dass** zumindest ein formgebender Bereich des Formwerkzeugs (1) in eine zur mittleren Längsachse der zylinderförmigen Einheit (3) parallele Richtung geneigt oder gekrümmt ist und/oder
das Formwerkzeug (1) und die Strangziehvorrichtung so eingerichtet sind, dass der Normalvektor der Tangentialebene der in dem formgebenden Bereich des Formwerkzeugs (1) verlaufenden Trajektorie des Verbundprofils (2) mit der mittleren Längsachse der zylinderförmigen Einheit (3) einen Winkel φ bildet, der größer als 0° und kleiner als 90° ist oder
die zylinderförmige Einheit (3) mit mehreren um die mittlere Längsachse der zylinderförmigen Einheit (3) kreisförmig angeordneten und zur mittleren Längsachse der zylinderförmigen Einheit (3) parallel verlaufenden Fördervorrichtungen (6) gebildet ist, wobei mindestens eine Fördereinrichtung (6.1) der Fördervorrichtungen (6) dazu eingerichtet ist, das gekrümmte Verbundprofil (2) in eine zur mittleren Längsachse der zylinderförmigen Einheit (3) parallele Richtung während des Aufwickelns zu verschieben oder zu ziehen
und/oder mindestens eine Fördereinrichtung (6.1) der Fördervorrichtungen (6) mindestens ein Fixiermittel und mindestens einen Antrieb aufweist, wobei die mindestens eine Fördervorrichtung (6.1) dazu eingerichtet ist, das gekrümmte Verbundprofil (2) mittels des mindestens einen Fixiermittels an der mindestens einen Fördervorrichtung (6.1) zu fixieren und mittels des mindestens einen Antriebs in eine zur mittleren Längsachse der zylinderförmigen Einheit (3) parallele Richtung zu verschieben oder zu ziehen oder
die Strangziehvorrichtung zusätzlich eine entlang ihrer mittleren Längsachse stabförmige Justiervorrichtung (7) aufweist, die mit den Fördervorrichtungen (6) über Haltemittel (8) gelenkig verbunden ist, wobei durch ein Ziehen und/oder Drücken der stabförmigen Justiervorrichtung (7) entlang der mittleren Längsachse der zylinderförmigen Einheit (3) der Abstand der Fördervorrichtungen (6) von der mittleren Längsachse der zylinderförmigen Einheit (3) und damit der Radius der zylinderförmigen Einheit (3) verändert wird.

8. Pultrusionsvorrichtung nach Anspruch 7, **dadurch gekennzeichnet, dass** der äußere Radius der zylinderförmigen Einheit (3) dem in dem Formwerkzeug (1) vorgegebenen Krümmungsradius des Verbundprofils (2) entspricht oder auf einen vorgebbaren Radius einstellbar ist.

9. Pultrusionsvorrichtung nach Anspruch 7 oder 8, **dadurch gekennzeichnet, dass** die Fördervorrichtungen (6) jeweils mit mindestens einer umlaufenden Schleppkette oder jeweils mit einem umlaufenden Förderband gebildet sind.

10. Pultrusionsvorrichtung nach einem der Ansprüche 7 bis 9, **dadurch gekennzeichnet, dass** die Strangziehvorrichtung mit einem Einlegeband (4), das hohlzylindrische Erhöhungen (5) aufweist, gebildet ist, wobei die Strangziehvorrichtung eingerichtet ist, das Einlegeband (4) zusammen mit den Verstärkungsmaterialien durch das Formwerkzeug (1) zu ziehen und auf der zylindrischen Einheit (3) aufzuwickeln.

## Claims

1. A pultrusion method for producing curved composite profiles, in which
reinforcement materials are wetted with a polymer matrix material and the wetted reinforcement materials are pulled through a forming die (1) by way of a pultrusion unit, the wetted reinforcement materials being shaped in the forming die (1) into a composite profile (2) and being cured in a dimensionally stable manner, and
the composite profile (2) that has been cured in a dimensionally stable manner, after exiting the forming die (1), being continuously wound on a cylindrical unit (3) as part of the pultrusion unit, and
the continuous winding of the composite profile (2) being achieved by a continuous rotation of the cylindrical unit (3) about the center longitudinal axis thereof,
**characterised in that**
the composite profile (2) is wound with a plurality of windings in a spiral-shaped manner or in the shape of a helix onto the cylindrical unit (3).

2. The pultrusion method according to claim 1, **characterized in that** the composite profile (2) is wound in the form of a solid and dimensionally stable hollow profile onto the cylindrical unit (3).

3. The pultrusion method according to any one of the preceding claims, **characterized in that** circular ring-shaped segments having at least one winding are severed from the wound composite profile (2) using a V-cut.

4. The pultrusion method according to any one of the preceding claims, **characterized in that** the composite profile (2) is at least intermittently pulled or pushed in a direction that is parallel to the center longitudinal axis of the cylindrical unit (3) so that continuous winding of the composite profile (2) in the form of a helix is achieved by an offset of the windings which is formed in the pulling or pushing direction.

5. The pultrusion method according to any one of the preceding claims, **characterized in that** the curved composite profile (2), prior to being wound on the cylindrical unit (3), is bent in a direction that is parallel to the center longitudinal axis of the cylindrical unit (3) by at least a width of the cross-section of the curved composite profile (2) so that continuous winding of the composite profile (2) in the form of a helix is achieved by an offset of the windings which is formed in the bending direction.

6. The pultrusion method according to any one of the preceding claims, **characterized in that** the reinforcement materials, together with a liner strip (4), are pulled through the forming die (1) and are wound on the cylindrical unit (3) in the form of the composite profile (2), the liner strip (4) being integrally joined with the reinforcement materials in the forming die (1) and/or the liner strip (4) having hollow-cylindrical elevations (5), which predefine a perforation to be achieved in the curved and cured composite profile (2).

7. A pultrusion device for producing curved composite profiles comprising a forming die (1) and a pultrusion unit which comprises a cylindrical unit (3),
the forming die (1) being configured to shape reinforcement materials wetted with a polymer matrix material into a composite profile (2) having a predefined cross-sectional profile and/or radius of curvature and to cure these in a dimensionally stable manner,
and the pultrusion unit being configured to continuously wind the cured reinforcement materials shaped into a composite profile (2) on the cylindrical unit (3), and
the pultrusion unit comprising a rotary drive, which is configured to rotate the cylindrical unit (3) about the center longitudinal axis thereof,
**characterised in that**
at least one shaping region of the forming die (1) is inclined or curved in a direction that is parallel to the center longitudinal axis of the cylindrical unit (3) and/or
the forming die (1) and the pultrusion unit are configured so that the normal vector of the tangential plane of the trajectory of the composite profile (2) which extends in the shaping region of the forming die (1) forms an angle ϕ with the center longitudinal axis of the cylindrical unit (3) which is greater than 0° and smaller than 90°, or
the cylindrical unit (3) is formed with a plurality of conveying devices (6), which are arranged in a circular manner about the center longitudinal axis of the cylindrical unit (3) and extend parallel to the center longitudinal axis of the cylindrical unit (3), at least one conveying unit (6.1) of the conveying devices (6) being configured to displace or pull the curved composite profile (2) in a direction parallel to the center longitudinal axis of the cylindrical unit (3) during the winding process,
and/or at least one conveying unit (6.1) of the conveying devices (6) comprises at least one fixing means and at least one drive, the at least one conveying device (6.1) being configured to fix the curved composite profile (2) at the at least one conveying device (6.1) by way of the at least one fixing means and to displace or pull it in a direction parallel to the center longitudinal axis of the cylindrical unit (3) by way of the at least one drive, or
the pultrusion unit additionally comprises an adjusting device (7) that is rod-shaped along the center longitudinal axis, which is connected in an articulated manner to the conveying devices (6) by way of retaining means (8), the distance between the conveying devices (6) and the center longitudinal axis of the cylindrical unit (3), and thus the radius of the cylindrical unit (3), being varied by pulling and/or pushing the rod-shaped adjusting device (7) along the center longitudinal axis of the cylindrical unit (3).

8. The pultrusion device according to claim 7, **characterized in that** the outer radius of the cylindrical unit (3) corresponds to the radius of curvature of the composite profile (2) predefined in the forming die (1) or can be set to a predefinable radius.

9. The pultrusion device according to claim 7 or 8, **characterized in that** each of the conveying devices (6) is formed with at least one revolving drag chain or with a revolving conveyor belt.

10. The pultrusion device according to any one of claims 7 to 9, **characterized in that** the pultrusion unit is formed with a liner strip (4) having hollow-cylindrical elevations (5), the pultrusion unit being configured to pull the liner strip (4), together with the reinforcement materials, through the forming die (1) and wind it on the cylindrical unit (3).

## Revendications

1. Procédé de pultrusion pour la fabrication de profilés composites courbés, selon lequel
des matériaux de renforcement sont mouillés avec un matériau de matrice polymère et les matériaux de renforcement mouillés sont tirés au moyen d'un dispositif d'extrusion par étirage à travers un outil de formage (1), dans lequel les matériaux de renforcement mouillés sont formés dans l'outil de formage (1) en un profilé composite (2) et durcis de manière indéformable, et
le profilé composite (2) durci de manière indéformable est enroulé en continu, après sa sortie de l'outil de formage (1), sur une unité cylindrique (3) faisant partie du dispositif d'extrusion par étirage, et
l'enroulement continu du profilé composite (2) est obtenu par une rotation continue de l'unité cylindrique (3) autour de son axe longitudinal central ;
**caractérisé en ce que**
le profilé composite (2) est enroulé avec plusieurs spires en forme de spirale ou d'hélice sur l'unité cylindrique (3).

2. Procédé de pultrusion selon la revendication 1, **caractérisé en ce que** le profilé composite (2) est enroulé sur l'unité cylindrique (3) en tant que profilé creux solide et indéformable.

3. Procédé de pultrusion selon l'une quelconque des revendications précédentes, **caractérisé en ce que** des segments en forme d'anneau de cercle avec au moins une spire sont séparés du profilé composite (2) enroulé au moyen d'une coupe en V.

4. Procédé de pultrusion selon l'une quelconque des revendications précédentes, **caractérisé en ce que** le profilé composite (2) est au moins temporairement tiré ou poussé dans une direction parallèle à l'axe longitudinal central de l'unité cylindrique (3), de sorte qu'un enroulement continu du profilé composite (2) sous forme d'hélice est obtenu par un décalage des spires réalisé dans la direction de traction ou de poussée.

5. Procédé de pultrusion selon l'une quelconque des revendications précédentes, **caractérisé en ce que**, avant d'être enroulé sur l'unité cylindrique (3), le profilé composite (2) courbé est fléchi dans une direction parallèle à l'axe longitudinal central de l'unité cylindrique (3) sur au moins une largeur de la section transversale du profilé composite (2) courbé, de sorte qu'un enroulement continu du profilé composite (2) sous forme d'hélice est obtenu par un décalage des spires réalisé dans la direction de fléchissement.

6. Procédé de pultrusion selon l'une quelconque des revendications précédentes, **caractérisé en ce que** les matériaux de renforcement sont tirés à travers l'outil de formage (1) conjointement avec une bande d'insertion (4) et enroulés sur l'unité cylindrique (3) sous la forme du profilé composite (2), dans lequel la bande d'insertion (4) est reliée dans l'outil de formage (1) aux matériaux de renforcement par liaison de matière et/ou la bande d'insertion (4) présente des reliefs cylindriques creux (5) qui définissent une perforation à obtenir dans le profilé composite (2) courbé et durci.

7. Dispositif de pultrusion pour la fabrication de profilés composites courbés avec un outil de formage (1) et un dispositif d'extrusion par étirage qui présente une unité cylindrique (3), dans lequel
l'outil de formage (1) est conçu pour former des matériaux de renforcement mouillés avec un matériau de matrice polymère en un profilé composite (2) avec un profil de section transversale et/ou rayon de courbure prédéfini et pour les durcir de manière indéformable,
et le dispositif d'extrusion par étirage est conçu pour enrouler en continu les matériaux de renforcement formés et durcis en un profilé composite (2) sur l'unité cylindrique (3) et
le dispositif d'extrusion par étirage présente un entraînement en rotation qui est conçu pour faire tourner l'unité cylindrique (3) autour de son axe longitudinal central,
**caractérisé en ce que**
au moins une zone de mise en forme de l'outil de formage (1) est inclinée ou courbée dans une direction parallèle à l'axe longitudinal central de l'unité cylindrique (3), et/ou
l'outil de formage (1) et le dispositif d'extrusion par étirage sont conçus de sorte que le vecteur normal du plan tangentiel de la trajectoire du profilé composite (2) s'étendant dans la zone de mise en forme de l'outil de formage (1) forme un angle ϕ avec l'axe longitudinal central de l'unité cylindrique (3), qui est supérieur à 0° et inférieur à 90° ou
l'unité cylindrique (3) est formée avec plusieurs dispositifs de transport (6) disposés en cercle autour de l'axe longitudinal central de l'unité cylindrique (3) et s'étendant parallèlement à l'axe longitudinal central de l'unité cylindrique (3), dans lequel au moins un système de transport (6.1) des dispositifs de transport (6) est conçu pour déplacer ou pour tirer le profilé composite (2) courbé dans une direction parallèle à l'axe longitudinal central de l'unité cylindrique (3) pendant l'enroulement
et/ou au moins un système de transport (6.1) des dispositifs de transport (6) présente au moins un moyen de fixation et au moins un entraînement, dans lequel le au moins un dispositif de transport (6.1) est conçu pour fixer le profilé composite (2) courbé au moyen du au moins un moyen de fixation sur le au moins un dispositif de transport (6.1) et pour le déplacer ou le tirer au moyen du au moins un entraînement dans une direction parallèle à l'axe longitudinal central de l'unité cylindrique (3) ou
le dispositif d'extrusion par étirage présente en outre un dispositif d'ajustement (7) en forme de barre le long de son axe longitudinal central, qui est relié de manière articulée aux dispositifs de transport (6) par des moyens de retenue (8), dans lequel la distance des dispositifs de transport (6) par rapport à l'axe longitudinal central de l'unité cylindrique (3) et donc le rayon de l'unité cylindrique (3) est modifié(e) par une traction et/ou pression du dispositif d'ajustement (7) en forme de barre le long de l'axe longitudinal central de l'unité cylindrique (3).

8. Dispositif de pultrusion selon la revendication 7, **caractérisé en ce que** le rayon extérieur de l'unité cylindrique (3) correspond au rayon de courbure du profilé composite (2) prédéfini dans l'outil de formage (1) ou peut être réglé sur un rayon pouvant être prédéfini.

9. Dispositif de pultrusion selon la revendication 7 ou 8, **caractérisé en ce que** les dispositifs de transport (6) sont formés chacun avec au moins une chaîne d'entraînement à raclette en circulation ou chacun avec une bande transporteuse en circulation.

10. Dispositif de pultrusion selon l'une quelconque des revendications 7 à 9, **caractérisé en ce que** le dispositif d'extrusion par étirage est formé avec une bande d'insertion (4) qui présente des reliefs cylindriques creux (5), dans lequel le dispositif d'extrusion par étirage est conçu pour tirer la bande d'insertion (4) conjointement avec les matériaux de renforcement à travers l'outil de formage (1) et pour l'enrouler sur l'unité cylindrique (3).
